Europäisches Patentamt

European Patent Office

Office européen des brevets

(11) Veröffentlichungsnummer: **0 237 001**

**A2**

(12) **EUROPÄISCHE PATENTANMELDUNG**

(21) Anmeldenummer: 87103310.6

(22) Anmeldetag: 08.03.87

(51) Int. Cl.4: **B01D 53/34**

(30) Priorität: 12.03.86 DE 3608170

(43) Veröffentlichungstag der Anmeldung:
16.09.87 Patentblatt 87/38

(84) Benannte Vertragsstaaten:
AT BE CH FR GB LI NL SE

(71) Anmelder: Keramchemie GmbH
Berggarten 1
D-5433 Siershahn(DE)

(72) Erfinder: Schippert, Egbert, Dr.Dipl.-Chem.
Am Metzenbäumchen 13
D-5419 Dierdorf-Brückrachdorf(DE)
Erfinder: Christl, Wolfgang
Am Rain 6
D-5438 Westerburg-Sainscheid(DE)

(74) Vertreter: Kossobutzki, Walter, Dipl.-Ing.
Waldstrasse 6
D-5419 Helferskirchen(DE)

(54) Verfahren und Vorrichtung zur Reinigung von mit biologisch abbaubaren Verunreinigungen belasteter Abluft.

(57) Bei einem Verfahren zur Einigung von mit biologisch abbaubaren Verunreinigungen belastete Abluft wird die Abluft durch einen Absorptionsturm geführt, in dem die Verunreinigungen von einer Belebtschlamm enthaltenden Waschflüssigkeit absorbiert und anschließend in einem Belebtschlammbecken durch die Mikroorganismen des Belebtschlamms biologisch abgebaut werden.

Um sicherzustellen, daß auch bei großen Mengen abzubauender Verunreinigungen kleine Belebtschlammbecken benutzbar sind, der Restgehalt der abzuziehenden Waschflüssigkeit gering ist und nur wenig biologischer Überschußschlamm anfällt, wird die Abluft in mindestens zwei aufeinanderfolgenden Stufen mittels einer hoch belasteten Waschflüssigkeit vorgereinigt und danach mittels einer nur gering belasteten Waschflüssigkeit nachgereinigt, und die unterschiedlichen Waschflüssigkeiten werden in getrennten Be lebtschlammbecken kaskadenartig geführt, und nur die Waschflüssigkeit aus dem am geringsten belasteten Belebtschlammbecken wird abgezogen und anschließend geklärt.

## Verfahren und Vorrichtung zur Reinigung von mit biologisch abbaubaren Verunreinigungen belasteter Abluft

Die Erfindung bezieht sich auf ein Verfahren zur Reinigung von mit biologisch abbaubaren Verunreinigungen belasteter Abluft, bei dem die Abluft durch einen Absorptionsturm geführt wird, in dem die Verunreinigungen von einer Belebtschlamm enthaltenden Waschflüssigkeit absorbiert und anschließend in einem Belebtschlammbecken durch die Mikroorganismen des Belebtschlamms biologisch abgebaut werden sowie auf eine Vorrichtung zur Durchführung des Verfahrens.

Es ist ein Verfahren zur Reinigung von mit biologisch abbaubaren Verunreinigungen belasteter Abluft bekannt, bei dem die die Verunreinigungen enthaltende Abluft durch einen mit Füllkörpern gefüllten Absorptionsturm geführt wird. Im Gegenstrom zu dieser Abluft wird eine Belebtschlamm-Waschflüssigkeit durch den Absorptionsturm geleitet, die von einem Belebtschlammbecken aus im Kreislauf umgepumpt wird. Bei der Berührung der Belebtschlamm-Waschflüssigkeit mit der Abluft werden die in der Abluft enthaltenen Verunreinigungen von der Belebtschlamm-Waschflüssigkeit absorbiert. Die Absorptionsfähigkeit der BelebtschlammWaschflüssigkeit ist von der Löslichkeit der Verunreinigungen in der Waschflüssigkeit und deren Regenerierung abhängig. In dem Belebtschlammbecken werden die absorbierten Verunreinigungen durch artspezifische Mikroorganismen biologisch abgebaut. Die regenerierte Belebtschlamm-Waschflüssigkeit ist dann wieder fähig, Verunreinigungen aus der Abluft zu absorbieren.

Bei diesem bekannten Verfahren wird es als nachteilig angesehen, daß bei großen abzubauenden Mengen an Verunreinigungen das Belebungsbecken sehr groß sein muß oder der Restgehalt der abzuziehenden Waschflüssigkeit verhältnismäßig hoch ist. Weiterhin fallen bei diesem Verfahren große Mengen an biologischem Überschußschlamm an.

Der Erfindung liegt deshalb die Aufgabe zugrunde, ein Verfahren zur Reinigung von mit biologisch abbaubaren Verunreinigungen belasteter Abluft so weiterzubilden, daß auch bei großen Mengen abzubauender Verunreinigungen unter Beibehaltung von einem verhältnismäßig kleinen Belebtschlammbecken der Restgehalt der abzuziehenden Waschflüssigkeit gering ist und nur wenig biologischer Überschußschlamm anfällt. Ferner soll das Verfahren so weitergebildet werden, daß es auch in wirtschaftlicher Weise zur Reinigung von heißer, Harzkondensate enthaltender Abluft aus Spritzkabinen und/oder Trockenkammern von Lackieranlagen eingesetzt werden kann.

Zur Lösung der erstgenannten Aufgabe wird gemäß der Erfindung vorgeschlagen, daß die Abluft in mindestens zwei aufeinanderfolgenden Stufen mittels einer hochbelasteten Waschflüssigkeit vorgereinigt und danach mittels einer nur gering belasteten Waschflüssigkeit nachgereinigt wird und daß die unterschiedlichen Waschflüssigkeiten in getrennten Belebtschlammbecken kaskadenartig geführt werden und nur die Waschflüssigkeit aus dem am geringsten belasteten Belebtschlammbecken abgezogen und anschließend geklärt wird.

Durch die beiden Reinigungsstufen und die Kaskadenführung der Waschflüssigkeit wird auch bei kleinen Belebtschlammbecken eine hohe Abbaurate erzielt, so daß die Restkonzentration in der abzuziehenden Waschflüssigkeit gering ist. Durch die Kaskadenführung der Waschflüssigkeit, das hohe Bioschlammalter und geringe Nährstoffzufuhr fällt nur eine geringe Menge an Überschußschlamm an. Das Abfallprodukt ist nur biologisch gereinigtes Wasser, so daß das Verfahren umweltfreundlich ist.

Weitere Merkmale des Verfahrens sowie eine Vorrichtung zur Durchführung des Verfahrens sind in den Ansprüchen 2 -18 offenbart.

Das erfindungsgemäße Verfahren wird nachfolgend anhand eines in einer Zeichnung schematisch dargestellten Ausführungsbeispieles näher erläutert. Dabei wird ein Verfahren zur biologischen Reinigung der Abluft einer Dosenlackieranlage beschrieben. Von den Spritzkabinen und den Trockenöfen dieser Dosenlackieranlage fallen stündlich etwa 85 000 m³ Abluft mit einer Temperatur von etwa 160 °C an. Diese Abluftmenge enthält etwa 35 kg wasserlösliche Lösemittel, wie Alkohole, Glykole, Ketone und Glykoläther, 4 kg aromatische Kohlenwasserstoffe, wie Toluol, und 2 kg klebrige, aushärtende Harzkondensate sowie geringe Mengen an geruchsintensiven Stoffen.

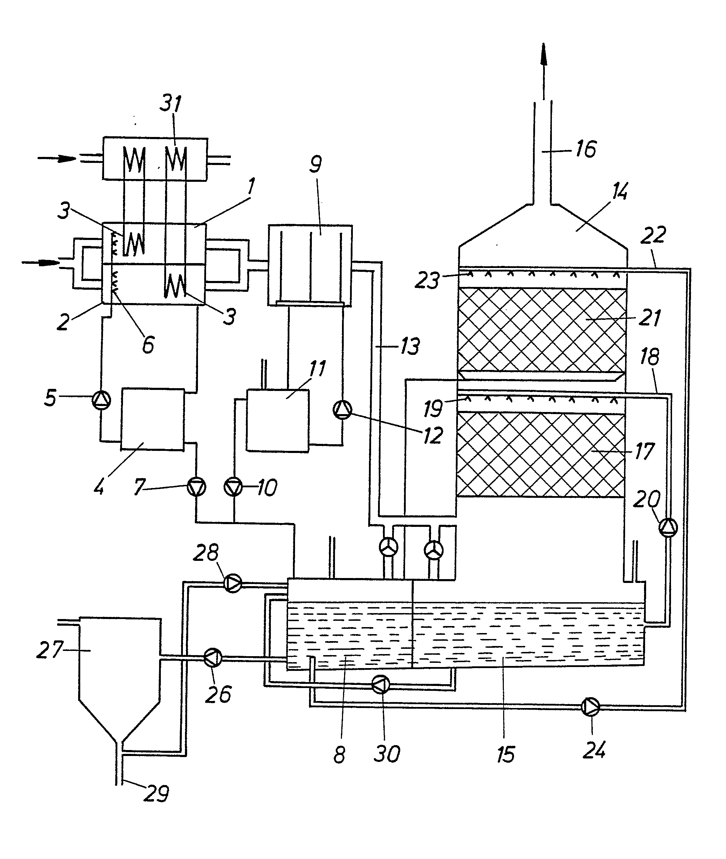

Die in der Zeichnung zur Durchführung dieses Verfahrens dargestellte Vorrichtung besteht aus zwei Hauptteilen, nämlich einer Abluftaufbereitungsanlage und einer Biowaschanlage. In der Aufbereitungsanlage werden die Abluft auf eine Temperatur von unter 43 °C abgekühlt und die Harzkondensate abgeschieden, während in der Biowaschanlage die Lösemittel absorbiert und abgebaut werden.

Die Abluftaufbereitungsanlage besteht aus zwei parallel zueinander geschalteten Luft-Wasser-Kühlern 1, 2, die normalerweise von der aus der Dosenlackieranlage abgezogenen, heißen Abluft durchströmt werden. In jedem Luft-Wasser-Kühler 1,2 sind rippenlose Kühlrohre 3, beispielsweise mit ovalem Querschnitt, vorgesehen, die vom Kühlwasser durchströmt werden. In diesen Luft-Wasser-Kühlern 1, 2 wird die heiße Abluft auf die erforderliche Temperatur von kleiner als 43 °C abgekühlt. Bei diesem Abkühlvorgang bleibt ein nicht unerheblicher Teil der in der Abluft enthaltenen Harzkondensate auf den Kühlrohren 3 kleben und verharrt durch Polymerisation. Um die Kühlwirkung ständig aufrecht zu erhalten, müssen die Kühlrohre 3 in regelmäßigen Zeitabständen gereinigt und damit von den Harzen befreit werden. Diese Harze sind, wenn sie ganz frisch abgeschieden sind, relativ gut in Wasser bzw. in stark alkalischen Reinigern löslich. Für die Reinigung der Kühlrohre 3 ist den Luft-Wasser-Kühlern 1, 2 ein Behälter 4 zugeordnet, der mit einer stark alkalischen Reinigungsflüssigkeit gefüllt ist. Über eine Pumpe 5 wird die Reinigungsflüssigkeit aus dem Behälter 4 durch Sprühdüsen 6 auf die Kühlrohre 3 in den Luft-Wasser-Kühlern 1, 2 gesprüht und damit die Harze von den Kühlrohren 3 abgeschieden. Die die abgeschiedenen bzw. abgewaschenen Harzkondensate enthaltende Reinigungsflüssigkeit strömt im Kreislauf in den Behälter 4 zurück. Die in der Reinigungsflüssigkeit gelösten Harze sind biologisch abbaubar und werden von Zeit zu Zeit entsorgt, indem sie über eine Pumpe 7 einem Belebtschlammbecken 8 der weiter unten erläuterten Biowaschanlage zudosiert werden.

Um während einer solchen Reinigungsperiode eine ausreichende Abkühlung der Abluft sicherzustellen, werden die beiden Luft-Wasser-Kühler 1, 2 nur wechselweise gereinigt, so daß dann die gesamte Abluft der Dosenlackieranlage nur durch einen Luft-Wasser-Kühler 1 oder 2 strömt. Dies hat zur Folge, daß die Abluft während der Reinigungsperiode nicht die Abkühlung wie beim normalen Betrieb erfährt. Die restliche Kühlung der Abluft auf eine Temperatur unter 43 °C erfolgt in dem nachgeordneten Wäscher 9.

Der Wäscher 9 besteht aus zwei sogenannten Sprühzonen, die jeweils mit einem nachgeschalteten Hochleistungstropfenabscheider versehen sind. Hier erfolgt jedoch nicht nur die vor erwähnte Restkühlung, sondern es werden auch zusätzlich die feinen Harzkondensate abgeschieden und in der Sprühflüssigkeit aufgelöst, wo sie sich anreichern. Die hier in Wasser gelösten niedermolekularen Harze sind ebenfalls biologisch abbaubar und werden durch Zudosierung über eine Pumpe 10 in das bereits erwähnte Belebtschlammbecken 8 entsorgt. Die Sprühflüssigkeit, die aus Wasser besteht, befindet sich in einem Behälter 11 und wird über die Pumpe 10 im Kreislauf geführt. Während des Betriebes der beiden Luft-Wasser-Kühler 1, 2 finden im Wäscher 9 keine nennenswerte Abkühlung der Abluft statt. Von dem Wäscher 9 gelangt die abgekühlte Abluft über eine Leitung 13 zur eigentlichen Biowaschanlage.

Die Biowaschanlage besteht in diesem Ausführungsbeispiel aus einem zweistufigem Absorptionsturm 14, der an seinem unteren Ende in ein Belebtschlammbecken 15 übergeht, welches gleichzeitig den sogenannten Sumpf für den Absorptionsturm bildet. Mit Abstand über dem Belebtschlammbecken 15 mündet seitlich die Leitung 13 für die Abluft in den Absorptionsturm 14, während am oberen Ende des Absorptionsturmes 14 eine Austrittsöffnung 16 für die gereinigte Abluft vorhanden ist. Mit Abstand über der Leitung 13 sind an der Innenwandung des Absorptionsturmes 14 nicht dargestellte Stützelemente vorgesehen, die eine Füllkörperschicht 17 aufnehmen. Oberhalb dieser Füllkörperschicht 17 befindet sich eine Rohrleitung 18, die mit mehreren, gleichmäßig über den Querschnitt des Absorptionsturmes 14 verteilt angeordneten Sprühdüsen 19 versehen ist. Über eine Pumpe 20 wird die Flüssigkeit aus dem Belebtschlammbecken 15 durch die Sprühdüsen 19 auf die Füllkörperschicht 17 versprüht bzw. verteilt.

Oberhalb der Rohrleitung 18 ist über einer luftdurchlässigen Trennplatte 21a eine weitere Füllkörperschicht 21 vorgesehen, der ebenfalls eine Rohrleitung 22 mit Sprühdüsen 23 zugeordnet ist. Diese Rohrleitung 22 ist über eine Pumpe 24 mit dem Belebtschlammbecken 8 verbunden.

Die mit den Schadestoffen beladene, aber von den Harzkondensaten befreite Abluft wird dem Absorptionsturm 14 von unten zugeführt. Im Gegenstrom zur Abluft werden in den beiden getrennten Stufen Belebtschlamm enthaltende Waschflüssigkeiten, die schwach alkalisch eingestellt sind, aus den beiden Belebtschlammbecken 8, 15, versprüht. Dabei findet der Stoffaustausch in den Füllkörperschichten 17, 21 statt, die bei einer großen freien Durchgangsfläche eine starke Verwirbelung von Abluft und Waschflüssigkeit und damit einen hohen Grad an Oberflächenerneuerung bewirken, was für einen guten Stoffübergang entscheidend ist. Die Sprühdüsen 19, 20 sind aus verstopfungsunempfindlichen Vollkegeldüsen ausgebildet. Bedingt durch die hohe Berieselungsdichte und die Verwendung geregelter Füllkörperschichten bildet sich kein biologischer Film auf den Einbauten. Nachdem die Waschflüssigkeiten die einzelnen Füllkörperschichten mit den Schadstoffen bzw. Lösemitteln beladen verlassen, laufen sie in das jeweilige Belebtschlammbecken 8, 15 zurück. Von der Abluft mitgerissene Wassertropfen werden nach jeder Stufe mittels eines an sich bekannten, dynamischen Tropfenabscheider abgeschieden.

Die biologische Regeneration der beladenen Waschflüssigkeiten bzw. der Abbau der absorbierten Schadstoffe erfolgt in den Belebtschlammbecken 8, 15. Hier werden die organischen Stoffe durch die Bakterien zu Kohlendioxyd und Wasser abgebaut. Gleichzeitig entsteht eine geringe Menge von biologischem Überschußschlamm. Da der Sauerstoffeintrag im Absorptionsturm 14 meistens nicht ausreichend ist, um die Bakterien zu versorgen, können in den Belebtschlammbecken 8, 15 auch Belüfter eingebaut sein. Diese Tauchbelüfter können über eine Zeitschaltuhr abwechselnd betrieben werden. Sofern eine Sauerstoffmessung anzeigt, daß eine vorgegebene Konzentration unterschritten ist, können auch beide Tauchbelüfter gleichzeitig betrieben werden.

Eine zu starke Anreicherung der Waschflüssigkeiten mit biologischen Hemmstoffen wird dadurch verhindert, daß kontinuierlich eine gewisse Menge an Waschflüssigkeit aus den beiden Belebtschlammbecken 8, 15 abgezogen und im Belebtschlammbecken 15 durch Frischwasser ersetzt wird. Die aus dem Becken 15 abgezogene Waschflüssigkeit wird dem Belebtschlammbecken 8 zudosiert. Die hier abgezogene Waschflüssigkeit wird über eine Pumpe 26 einem Absetzbecken 27 zugeführt. Hier kommt es zu einer Sedimentation. Je nach Bedarf kann die geklärte Waschflüssigkeit über eine Pumpe 28 dem Belebtschlammbecken 8 wieder zugeführt werden. Der Schlamm wird über eine Leitung 29 entfernt.

Um eine hohe Abbaurate zu erreichen, die grcßer als 200 mg/l•h Lösemittel ist, zu erreichen, wird das Belebtschlammbecken 15 mit einer hohen Lösemittelkonzentration betrieben. Die kontinuierlich abgezogene Waschflüssigkeit wird über die Pumpe 30 dem Belebtschlammbecken 8 zudosiert. Das Belebtschlammbecken 8 wird nur mit einer geringen Lösemittelkonzentration betrieben, was hier nur eine niedrige Abbaugeschwindigkeit bedeutet, aber den Vorteil hat, daß keine Abwasserprobleme- entstehen. Durch die hohe Restlösemittelkonzentration im Belebtschlammbecken 15 und die daraus resultierende hohe biologische Abbaugeschwindigkeit werden Abbauraten von ca. 200 g Lösemittel pro m³ - Belebtschlammbecken pro Stunde erreicht, so daß verhältnismäßig kleine Belebtschlammbecken verwendet werden können. Da der Schlamm sehr leicht ist und die Tendenz hat, aufzuschwimmen, kann die Abtrennung des Schlamms in vorteilhafter Weise durch Flotation erfolgen.

Bei der aus der Dosenlackieranlage übernommenen Abluft wurden folgende Abscheidegerade erreicht:
Wasserlösliche Lösemittel 95 %,
aromatische Kohlenwasserstoffe 60 %,
geruchsintensive Stoffe 95 %.
Die Abwasserkonzentration (CSB) war kleiner als 200 mg $O_2$/l.

Bei dem in der Zeichnung dargestellten Ausführungsbeispiel kann die in den Luft-Wasser-Kühlern 1, 2 aufgenommene Wärme über einem zusätzlichen Wärmeaustauscher 31 ausgenutzt werden.

**Ansprüche**

1. Verfahren zur Reinigung von mit biologisch abbaubaren Verunreinigungen belastete Abluft, bei dem die Abluft durch einen Absorptionsturm geführt wird, in dem die Verunreinigungen von einer Belebtschlamm enthaltenden Waschflüssigkeit absorbiert und anschließend in einem Belebtschlammbecken durch die Mikroorganismen des Belebtschlamms biologisch abgebaut werden,
dadurch gekennzeichnet,
daß die Abluft in mindestens zwei aufeinanderfolgenden Stufen mittels einer hoch belasteten Waschflüssigkeit vorgereinigt und danach mittels einer nur gering belasteten Waschflüssigkeit nachgereinigt wird und daß die unterschiedlichen Waschflüssigkeiten in getrennten Belebtschlammbecken kaskadenartig geführt werden und nur die Waschflüssigkeit aus dem am geringsten belasteten Belebtschlammbecken abgezogen und anschließend geklärt wird.

2. Verfahren nach Anspruch 1,
dadurch gekennzeichnet,
daß der Waschflüssigkeit eine Nährstoffmenge an Stickstoff und Phosphor von C : N größer als 200 und von C : P größer als 1 000 zugeführt wird.

3. Verfahren nach Anspruch 1 oder 2,
dadurch gekennzeichnet,
daß die aus dem hoch belasteten Belebtschlammbecken abgezogene Waschflüssigkeit durch Frischwasser ersetzt wird.

4. Verfahren nach einem der Ansprüche 1 -3, bei dem die Abluft Harzkondensate enthält und heiß ist und beispielsweise aus Spritzkabinen und/oder Trockenkammern von Lackieranlagen stammt,
dadurch gekennzeichnet,
daß die Abluftluft vor dem Eintritt in den Absorptionsturm abgekühlt und die Harzkondensate abgeschieden werden.

5. Verfahren nach Anspruch 4,
dadurch gekennzeichnet,
daß die Abluft in einem Wärmeaustauscher abgekühlt und die in der Abluft enthaltenen Harzkondensate in einem Wäscher abgeschieden werden.

6. Verfahren nach Anspruch 4,
dadurch gekennzeichnet,
daß die Kühlung der Abluft und die Abscheidung der Harzkondensate in einer kombinierten Wärmeaustauscher-Wäscher-Einheit durchgeführt wird.

7. Verfahren nach Anspruch 5 oder 6,
dadurch gekennzeichnet,
daß der Wärmeaustauscher periodisch mit einer hochalkalischen Reinigungsflüssigkeit besprüht und dabei die an demselben abgeschiedenen Harzkondensate abgewaschen werden.

8. Verfahren nach einem der Ansprüche 3 -7,
dadurch gekennzeichnet,
daß die abgeschiedenen und in Wasser gelösten, niedermolekularen Harzkondensate dem gering belasteten Belebtschlammbecken zudosiert werden.

9. Vorrichtung zur Reinigung von mit biologisch abbaubaren Verunreinigungen belasteter Abluft, insbesondere zur Durchführung des Verfahrens nach einem der Ansprüche I -5, bestehend aus einem mit einer Sprühzone versehenen Absorptionsturm und aus einem Belebtschlammbecken,
gekennzeichnet durch
mindestens zwei voneinander getrennte Sprühzonen (I7,2I), denen jeweils ein getrenntes Belebtschlammbecken (8,I5) zugeordnet ist und eine kaskadenartige Verbindung zwischen den Belebtschlammbecken.

IO. Vorrichtung nach Ansprüch 9,
dadurch gekennzeichnet,
daß die beiden Sprühzonen(I7,2I)übereinander in einem Absorptionsturm (I4) angeordnet sind.

II. Vorrichtung nach Anspruch 9 oder IO,
dadurch gekennzeichnet,
daß dem Absorptionsturm (I4) ein Wärmeaustauscher (I ) und ein Wäscher (9 ) vorgeordnet sind.

I2. Vorrichtung nach Anspruch II,
dadurch gekennzeichnet,
daß der Wärmeaustauscher (I, 2) und der Wäscher (9) als eine kombinierte Einheit ausgebildet sind.

I3. Vorrichtung nach Anspruch II oder I2,
dadurch gekennzeichnet,
daß der Wärmeaustauscher (I, 2) aus zwe parallel zueinander angeordneten Luft-Wasser-Kühlern (I, 2) besteht.

I4. Vorrichtung nach Anspruch I3,
dadurch gekennzeichnet,
daß die beiden Luft-Wasser-Kühler (I, 2) gemeinsam oder wechselweise vom Abluftstrom beaufschlagbar sind.

I5. Vorrichtung nach den Ansprüchen I3 und I4,
dadurch gekennzeichnet,
daß den beiden Luft-Wasser-Kühlern (I, 2) Sprühdüsen (6) für eine im Kreislauf geführte alkalische Reinigungsflüssigkeit zugeordnet sind.

I6. Vorrichtung nach einem der Ansprüche I4 oder I5,
dadurch gekennzeichnet,
daß das Kühlwasser der Luft-Wasser-Kühler (I, 2) im Kreislauf geführt ist.

I7. Vorrichtung nach Anspruch II,
dadurch gekennzeichnet,
daß im Kühlwasser-Kreislauf der Luft-Wasser-Kühler (I, 2) ein weiterer Wärmeaustauscher angeordnet ist.

I8. Vorrichtung nach Anspruch II,
dadurch gekennzeichnet,
daß der Wäscher (9) aus mindestens einer Sprühzone mit nachgeordnetem Hochleitungstropfenabscheider gebildet ist.